Europäisches Patentamt

European Patent Office

Office européen des brevets

(11) Numéro de publication : **0 435 708 B1**

(12) **FASCICULE DE BREVET EUROPEEN**

(45) Date de publication du fascicule du brevet :
06.09.95 Bulletin 95/36

(51) Int. Cl.⁶ : **G05D 1/08, B64G 1/24**

(21) Numéro de dépôt : **90403266.1**

(22) Date de dépôt : **20.11.90**

(54) **Procédé de contrôle d'attitude en roulis et en lacet d'un satellite.**

(30) Priorité : **29.11.89 FR 8915732**

(43) Date de publication de la demande :
**03.07.91 Bulletin 91/27**

(45) Mention de la délivrance du brevet :
**06.09.95 Bulletin 95/36**

(84) Etats contractants désignés :
**DE ES GB IT NL SE**

(56) Documents cités :
**EP-A- 0 101 333**
**EP-A- 0 295 978**
**FR-A- 2 522 614**
**FR-A- 2 531 547**

(73) Titulaire : **AEROSPATIALE Société Nationale Industrielle**
**37, Boulevard de Montmorency**
**F-75781 Paris Cédex 16 (FR)**

(72) Inventeur : **Flament, Patrick**
**32, Chemin des Vallons**
**F-06110 Le Cannet (FR)**

(74) Mandataire : **Rinuy, Santarelli**
**14, avenue de la Grande Armée**
**F-75017 Paris (FR)**

## Description

L'invention concerne le contrôle de l'attitude en roulis et en lacet d'un satellite stabilisé selon ses trois axes sur une orbite de service.

Un satellite désigne ici tout objet artificiel évoluant dans le système solaire; cet objet pouvant être:
- sur une orbite de la terre ou d'une quelconque autre planète du système solaire,
- sur une orbite d'un satellite d'une quelconque planète du système solaire,
- sur une orbite solaire éventuellement de transfert entre deux planètes.

On sait que, sur son orbite, un satellite est soumis à des couples perturbateurs dont les causes les plus importantes sont:
- la dissymétrie des effets de la pression de radiation solaire, due à l'incidence (différence de 90°) de l'axe de tangage (Y) du satellite par rapport au soleil, aux différences de réflectivité des éléments du satellite et aux dissymétries géométriques du satellite,
- l'influence du gradient de gravité terrestre,
- l'action du champ magnétique terrestre,
- l'influence aérodynamique de l'environnement (pour les orbites basses).

En conséquence, il est indispensable de prévoir des moyens pour contrôler l'attitude d'un satellite sur son orbite. A cet effet il a déjà été proposé quatre types de moyens actifs.

Trois de ces types de moyens actifs de contrôle d'attitude entraînent une augmentation de la masse du satellite:
- l'utilisation des tuyères principalement destinées au maintien à poste du satellite: cette solution, très courante, nécessite d'emporter une masse d'ergols supplémentaire pour le contrôle de l'attitude du satellite (par exemple une masse de 9 kg pour 7 ans de durée de vie),
- l'utilisation du champ magnétique terrestre, agissant sur des dipôles magnétiques créés à bord du satellite par des boucles de courant : cette solution nécessite d'emporter des bobines et parfois de noyaux ferromagnétiques,
- l'utilisation de la pression de radiation solaire agissant sur des surfaces spécifiques déployables et/ou orientables par rapport au corps du satellite à l'aide d'actionneurs qui pénalisent les bilans de masse et de fiabilité du satellite par l'ajout des surfaces orientables, voire de leur mécanisme de déploiement et/ou de leur mécanisme d'actionnement. En particulier, on peut citer :
  . document EP-A-0.295.978 pour : DISPOSITIF ET PROCEDE DE POINTAGE D'UNE SONDE SPATIALE VERS UN CORPS CELESTE,
  . brevet FR-2.513.589 : PROCEDE ET DISPOSITIF POUR ACTIONNER L'AXE DE ROULIS D'UN SATELLITE AVEC UNE DIRECTION DESIREE,
  . brevet DE-2.537.577 : LAGERREGELUNG FÜR SATELLITEN,
  . brevet FR-2.550.757 : REGULATION DE POSITION DE SATELLITES,
  . brevet US-3.304.028 : ATTITUDE CONTROL FOR SPACECRAFT,
  . brevet FR-2.529.166 : PROCEDE DE MAINTIEN EN POSITION D'UN SATELLITE PAR LA NAVIGATION A L'AIDE DE VOILE SOLAIRE ET VEHICULE SPATIAL METTANT EN OEUVRE LE PROCEDE,
  . brevet FR-2.530.046 : PROCEDE ET DISPOSITIF DE COMMANDE D'ATTITUDE POUR SATELLITE GEOSYNCHRONE.

Le quatrième type de moyens actifs, qui est le seul connu pour contrôler, sans pénalité de masse, l'attitude d'un satellite stabilisé autour de ses trois axes consiste à orienter convenablement les surfaces des ailes du générateur solaire par rapport au soleil à l'aide de leur moteur d'entraînement pour créer des couples autour de deux axes perpendiculaires à l'axe de tangage (Y) par l'effet de la pression de radiation solaire. Ce principe revient en fait à utiliser du matériel existant sur le satellite :
- les ailes du générateur solaire en tant que surface exposée aux radiations solaires,
- les moteurs d'entraînement du générateur solaire en tant qu'actionneurs de ces surfaces.

Ce principe est décrit en particulier dans les documents:
  . ATTITUDE CONTROL BY SOLAR SAILING - A PROMISING EXPERIMENT ON OTS 2 - ESA JOURNAL 1979, Vol 3.
  . ONE YEAR OF SOLAR SAILING WITH OTS - ESA BULLETIN 31-Août 1982
  . SYSTEME DE CONTROLE D'ATTITUDE D'UN SATELLITE GEOSTATIONNAIRE - Brevet FR-2.531.547
  . SYSTEME FOR CONTROLING THE DIRECTION OF THE MOMENTUM VECTOR OF A GEOSYNCHRONOUS SATELLITE - Brevet US-4.325.124
  . par ailleurs le brevet US-3.945.148: SATELLITE ROTATION BY RADIATION PRESSURE, propose l'utilisation de la pression solaire sur les ailes du générateur solaire convenablement orientées pour mettre un satellite en rotation en vue de sa stabilisation par rotation.

On désignera par la suite, sous le terme "générateur solaire", l'ensemble des deux ailes du générateur solaire, étant précisé que le terme "aile de générateur solaire désignera les ensembles qui peuvent être orientés par les moteurs d'entraînement, c'est-à-dire les ensembles constitués par:

- le générateur solaire proprement dit, c'est-à-dire les éléments à effet photovoltaïque,
- la structure qui porte l'ensemble de ces éléments,
- les mécanismes liés à cette structure qui permettent:
  . de la maintenir stockée avant que le satellite n'atteigne sa configuration orbitale,
  . de la déployer et de la maintenir déployée.
- tous les éléments additionnels qui, en configuration orbitale, sont fixés à cette structure et dont les rôles peuvent être divers. Par exemple, on peut citer:
  . les volets de protection thermique qui permettent de limiter les pertes thermiques du satellite durant les phases où le générateur solaire n'est pas complètement déployé,
  . les surfaces qui permettent d'améliorer le flux lumineux reçu par les éléments photovoltaïques (par exemple les écrans d'uniformisation d'ombre),
  . les voiles solaires dont le but est de modifier la capacité de couple de pilotage solaire de l'ensemble.

Dans certains cas, les radiateurs déployables dont peut être équipé le satellite, peuvent être utilisés également en tant que surfaces exposées aux radiations solaires.

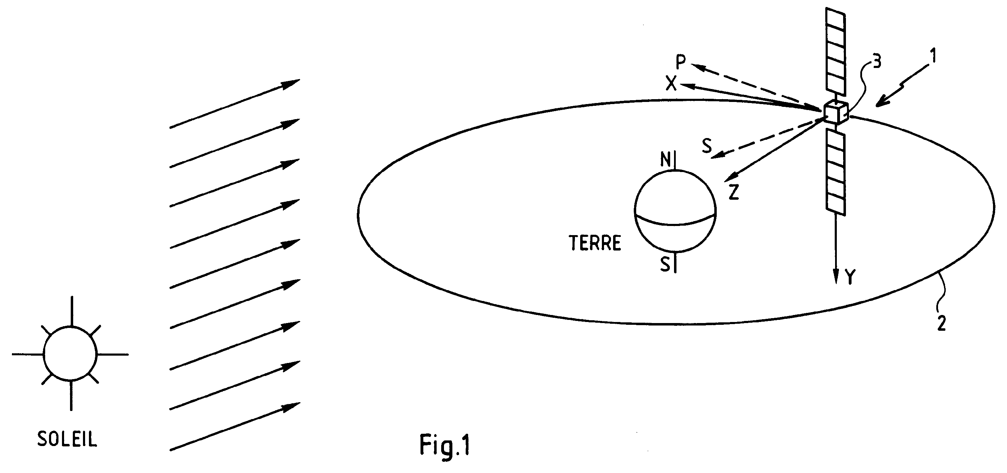

Le brevet US-4.325.124 précité propose une application de ce principe qui utilise l'information du senseur terrestre quatre fois par jour pour connaître le dépointage du satellite selon des axes inertiels S et P (voir figure 1). Ces informations sont ensuite utilisées pour commander en boucle ouverte une manoeuvre d'orientation de l'un des panneaux solaires, en avance ou en retard sur son mouvement nominal face au soleil, dans le but de créer des couples à même de rapprocher le satellite de son attitude désirée.

Le brevet FR-2.531.547 précité propose une autre application de ce principe qui utilise l'information du senseur terrestre deux fois par jour pour connaître le dépointage du satellite dans les axes inertiels S et P. Ces informations sont ensuite utilisées pour commander en boucle ouverte une modification de l'orientation des panneaux solaires qui permettra de compenser les couples perturbateurs inertiels du satellite.

Les principaux inconvénients de ces types de pilotage sans pénalité en masse résident dans le fait que:

- la commande est conçue pour piloter le satellite dans des axes inertiels, ce qui la rend incapable de piloter finement un satellite soumis à des couples perturbateurs liés au satellite ou/et de deuxième harmonique par rapport à la période orbitale. Par ailleurs, cette commande présente nécessairement des performances de pointages identiques autour des axes roulis (X) et lacet (Z). Cela entraîne une amélioration de la performance de pointage en lacet (qui en général n'est pas nécessaire) au détriment de la performance de pointage en roulis (qui est en général beaucoup plus recherchée);
- l'on n'effectue la mesure de l'attitude qu'une fois par jour, ce qui entraîne un temps de réponse très long du pilotage de l'attitude et rend le domaine de capture du mode de pilotage très restreint et le rend sensible à des phénomènes de nutation;
- la commande ne tient pas compte du couplage important des couples générés autour des deux axes rendant impossible certaines combinaisons de couples; cela limite la capacité du pilotage à compenser seulement certaines combinaisons favorables de couples inertiels;
- il est impossible de tirer parti de conceptions de contrôle d'attitude autres que celle à moment cinétique fixe suivant l'axe de tangage (Y) ou des possibilités d'autres actionneurs embarqués à bord du satellite.

L'invention a pour objet de pallier les inconvénients précités, sans pénalité en masse, en appliquant au satellite une loi de pilotage en boucle fermée, pouvant être définie dans les axes liés au satellite et permettant de contrôler le satellite de façon continue dans ses axes géométriques, de manière à autoriser un pilotage :

- dont les précisions de pointage en roulis et lacet sont indépendantes et peuvent être choisies séparément;
- dont le domaine de capture est compatible avec l'amplitude des couples perturbateurs;
- qui reste peu sensible aux phénomènes éventuels de nutation;
- qui permet de compenser les couples perturbateurs du satellite quelles que soient leur origine et leur loi d'évolution dans le temps (constants, inertiels, d'harmonique supérieure par rapport à la période orbitale),
- qui tire parti des possibilités éventuelles d'orientation du moment cinétique du satellite et de ses autres actionneurs.

L'invention propose à cet effet un procédé de contrôle de l'attitude en roulis et en lacet d'un satellite artificiel par ailleurs stabilisé en tangage sur son orbite dans le système solaire et comprenant un corps de satellite portant sur des faces dites Nord et Sud deux ailes de générateur solaire normalement dirigées approximativement vers le Soleil, orientables indépendamment l'une de l'autre autour d'un axe Nord-Sud dit de tangage par des moteurs d'entraînement commandables séparément et comportant un système de mesure d'attitude adapté à donner au moins une mesure de l'attitude en roulis ou en lacet, ce procédé comportant les étapes suivantes :

. au préalable:

- on sélectionne deux axes géométriques $\underline{x}$ et $\underline{z}$ du satellite qui sont contenus dans le plan des axes de roulis et de lacet, à l'axe $\underline{z}$ étant associée une valeur maximale d'erreur de couple de pilotage tolérable bien plus faible que la valeur maximale d'erreur de couple de pilotage tolérable sur l'axe $\underline{x}$, et

- on établit une loi de corrélation entre des doublets de valeurs possibles d'angles de dépointage $\gamma_N$ et $\gamma_S$ des ailes respectivement portées sur les faces Nord et Sud du corps de satellite par rapport à une configuration nominale de ces ailes dans laquelle ces ailes sont face au Soleil, et des couples solaires réalisables ($C_s$, $C_p$) en résultant dans le plan des axes de roulis et de lacet du fait de la pression de radiation solaire, et on détermine le lieu de ces couples solaires réalisables ;

. puis de façon cyclique selon une fréquence donnée constante ou non au cours du temps pendant que le satellite décrit son orbite :

- on détermine par calcul à partir de signaux de mesure instantanés issus du système de mesure d'attitude le couple de commande théorique, éventuellement, nul dans le plan des axes de roulis et de lacet nécessaire pour annuler l'erreur d'attitude instantanée du satellite, éventuellement nulle dans le plan des axes de roulis et de lacet,

- on recherche dans ce lieu des couples solaires réalisables, un couple de commande réalisable ayant, par rapport à l'axe $\underline{z}$ à l'instant considéré, une composante sensiblement identique à celle du couple de commande théorique et, par rapport à l'axe $\underline{x}$ à ce même instant considéré, une composante aussi proche que possible de la composante du couple de commande théorique, et on déduit par cette loi de corrélation le doublet associé de valeurs possibles d'angles de dépointage, et

- on commande les moteurs d'entraînement en sorte d'amener les ailes de générateur solaire à ce doublet de valeurs d'angles de dépointage.

La présente invention peut être adaptée à toutes les conceptions du contrôle d'attitude du satellite et permet une économie substantielle de masse dans tous les cas. Par exemple, on peut citer :

1. satellite à moment cinétique faible ou nul à orientation quelconque (en raccourci moment cinétique nul ou sans moment cinétique) muni de trois roues à réaction suivant les trois axes. Dans ce cas, le gain de masse permis par l'invention se situe au niveau :

. des ergols de désaturation des roues à réaction selon les axes de roulis et lacet puisque celles-ci sont désaturées par le pilotage solaire,

. de la taille même de ces roues à réaction de roulis-lacet puisque le moment cinétique maximal est divisé par cinq ou dix car il peut être désaturé deux fois par jour au lieu de toutes les semaines ou tous les mois;

2. satellite à moment cinétique fixe suivant l'axe de tangage (Y). Dans ce cas, le gain de masse permis par l'invention se situe au niveau des ergols de pilotage en roulis-lacet, puisque ce pilotage n'est plus désormais assuré par les tuyères que lorsque le pilotage solaire entraîne une perte de puissance électrique au niveau du générateur solaire qui n'est pas compensée par les marges de puissance. Ce cas se produit suivant les satellites durant 0% à 10% de la durée de vie du satellite;

3. satellite à moment cinétique suivant l'axe de tangage (Y), le moment cinétique étant orientable suivant une direction à l'aide, par exemple, de l'un des dispositifs suivants:

. une roue à réaction orientée suivant le degré de liberté du moment cinétique,

. deux roues cinétiques en V orientées dans leur ensemble suivant l'axe Y dont la différence de vitesse permet de déplacer le moment cinétique,

. une roue cinétique orientable dont l'axe est monté sur un pivot.

Dans ce cas, le gain de masse permis par l'invention se situe au niveau :

. des ergols de désaturation de la composante dans le plan roulis-lacet du moment cinétique puisque cette composante est désaturée par le pilotage solaire,

. des ergols de pilotage suivant la direction perpendiculaire au moment cinétique puisque ce pilotage n'est plus assuré par les tuyères;

4. satellite à moment cinétique suivant l'axe de tangage (Y), le moment cinétique étant orientable suivant deux directions à l'aide, par exemple, de l'un des dispositifs suivants:

. de deux roues à réaction orientées suivant chacun des degrés de liberté du moment cinétique,

. ou une roue cinétique orientable dont l'axe est monté sur un double pivot ou un joint de cardan.

Dans ce cas, le gain de masse permis par l'invention se situe au niveau des ergols de désaturation de la composante dans le plan roulis-lacet du moment cinétique puisque celle-ci est désaturée par le pilotage solaire.

5. satellite muni d'actionneurs continus (par exemple magnétocoupleurs ou propulsion électrique en plus des roues cinétiques ou des roues à réaction citées ci-dessus). Dans ce cas le gain permis par l'invention se situe au niveau:

. du nombre d'actionneurs continus qui peut être réduit à un seul axe (gain de masse),

. de la réduction de la capacité en couple des actionneurs continus (gain de masse),

. d'une réduction de l'utilisation des actionneurs continus, donc d'un gain de puissance électrique,

. d'une amélioration de la précision de pointage.

Dans tous les cas cités, les moments cinétiques peuvent être générés soit par une roue dont la génération de moments cinétiques est la seule fonction, soit par une partie, utile par ailleurs au satellite, qui est mise en rotation. Dans ce qui suit, le terme roue s'appliquera indifféremment à l'un ou l'autre de ces cas.

Plus précisément, l'invention propose les dispositions préférées suivantes :

- on commande des actionneurs dont le satellite est muni pour générer des couples de compensation définis par les écarts de couple selon au moins l'axe $x$ entre le couple de commande théorique et le couple de commande réalisable choisi pour la corrélation,
- le satellite comportant un système générateur de moment cinétique à composantes fixes (appelé par la suite moment cinétique fixe) dans le plan des axes de roulis et de lacet, les axes $x$ et $z$ sont choisis confondus respectivement avec les axes de roulis et de lacet,
- le système générateur de moment cinétique comporte une roue cinétique d'axe parallèle à l'axe de tangage Nord-Sud, - le satellite comportant un système générateur de moment cinétique éventuellement nul à une composante variable selon au moins un axe du plan des axes de roulis et de lacet, l'axe $x$ est choisi confondu avec cet axe et :

. lorsque les couples de commande théorique et réalisable sont différents, on applique à ce système générateur de moment cinétique un signal de commande adapté à provoquer une variation de ladite composante variable propre à générer un couple additionnel égal à la différence entre les couples de commande théorique et réalisable,

. lorsque les couples de commande théorique et réalisable sont égaux, on calcule la valeur d'un couple de désaturation propre à faire varier cette composante variable du moment cinétique jusqu'à une valeur nominale prédéterminée, on détermine par calcul un couple de commande théorique global égal à la somme du couple de commande théorique et du couple de désaturation, on recherche dans ce lieu des couples possibles, un second couple de commande réalisable ayant, par rapport à l'axe $z$, une composante sensiblement égale à celle du couple de commande théorique et, par rapport à l'axe $x$ une composante aussi proche que possible de celle du couple de commande théorique global, on en déduit par la loi de corrélation un second doublet de valeurs possibles d'angles de dépointage que l'on impose ensuite aux ailes du générateur solaire, et on impose au système générateur de moment cinétique une variation de cette composante variable adaptée à générer un couple de compensation égal mais opposé à la différence entre le second couple de commande réalisable et le couple théorique de commande,

- ce système générateur de moment cinétique comporte une roue à réaction orientée selon l'axe de composante variable, ou dont l'axe est contenu dans le plan défini par l'axe de tangage et l'axe de composante variable,
- ce système comporte en outre une roue cinétique sensiblement orientée selon l'axe de tangage,
- cette roue à réaction est orientée selon l'axe de lacet, l'axe $x$ étant choisi parallèle à cet axe de lacet et l'axe $z$ étant choisi parallèle à l'axe de roulis,
- ce système générateur de moment cinétique éventuellement nul est adapté à générer un moment cinétique à une pluralité de composantes selon des avis différents dans le plan des axes de roulis et de lacet, les axes $x$ et $z$ étant définis à chaque instant de façon à minimiser l'écart entre ces composantes variables et une valeur prédéterminée associée à chacune,
- ce système générateur de moment cinétique comporte une pluralité de roues à réaction dont les axes sont compris respectivement dans les plans définis par l'axe de tangage d'une part, l'un des axes de composante variable du moment cinétique d'autre part,
- ce système générateur de moment cinétique comporte une roue dont l'axe de rotation présente une pluralité de degré de liberté de rotation d'axes perpendiculairement aux axes de composantes variables,
- l'axe de la roue est nominalement orienté selon l'axe de tangage du satellite,
- la roue présente deux degrés de liberté autour des axes de roulis et de lacet du satellite,
- ce système générateur de moment cinétique est adapté à générer un moment cinétique à deux composantes variables selon des axes différents dans le plan des axes de roulis et de lacet, les axes $x$ et $z$ étant choisis confondus avec ces deux axes de composante variable et étant substituables l'un à l'autre,

l'axe $\underline{z}$ étant choisi à tout instant confondu avec celui des deux axes correspondant à celle des deux composantes variables qui est la plus éloignée d'une valeur nominale prédéterminée associée à cet axe,
- ce système générateur de moment cinétique éventuellement nul comporte deux roues à réaction orientées recpectivement selon les axes de roulis et de lacet,
- ce système comporte également une roue de réaction ou une roue cinétique orientée selon l'axe de tangage,
- le système générateur de moment cinétique comporte deux roues cinétiques disposés en V de chaque côté de l'axe de tangage et d'axes situés dans le plan défini par l'axe de tangage et l'axe de composante variable,
- l'axe de composante variable est orienté selon l'axe de lacet, l'axe $\underline{x}$ étant choisi parallèle à cet axe de lacet et l'axe $\underline{z}$ étant choisi parallèle à l'axe de roulis,
- le système générateur de moment cinétique comporte une roue cinétique dont l'axe présente un degré de liberté de rotation d'axe perpendiculaire à l'axe de composante variable,
- l'axe de la roue est nominalement orienté selon l'axe de tangage du satellite,
- l'axe de composante variable est orienté selon l'axe de lacet, l'axe $\underline{x}$ étant choisi parallèle à l'axe de lacet, et l'axe $\underline{z}$ étant choisi parallèle à l'axe de roulis,
- la période du cycle est comprise entre 0,5 seconde et 1000 secondes approximativement.

Des objets, caractéristiques et avantages de l'invention ressortent de la description qui suit, donnée à titre d'exemple non limitatif, en regard des dessins annexés sur lesquels:
- la figure 1 est une vue schématique dans l'espace d'un véhicule stabilisé autour de trois axes en train de décrire une orbite autour de la Terre,
- la figure 2 est une vue schématique en perspective de ce satellite dans une configuration dans laquelle la pression solaire génère un couple de moulin à vent,
- la figure 3 est une autre vue schématique en perspective de ce satellite dans une configuration dans laquelle la pression solaire génère un couple de déséquilibre et un couple associé de moulin à vent,
- la figure 4 est un graphique représentant les couples réalisables du fait de la pression de radiation solaire,
- les figures 5 et 6 sont deux exemples de détermination à l'aide du graphique de la figure 4 des couples à appliquer réellement à partir des couples souhaités,
- la figure 7 représente une configuration de roues à moment cinétique fixe,
- les figures 8 à 10 représentent des configurations de roues à moment cinétique orientable suivant un axe,
- les figures 11 et 12 représentent des configurations de roues à moment cinétique orientable suivant deux axes,
- la figure 13 représente une configuration de roues à moment cinétique faible d'orientation quelconque,
- la figure 14 représente un satellite équipé d'un actionneur magnétique,
- les figures 15 à 18 sont des schémas synoptiques de systèmes de commande d'attitude en roulis et en lacet associés respectivement aux figures 7, 8 à 10, 11 à 13 et 14.

La figure 1 représente un satellite en train de décrire une orbite 2 circulaire autour de la Terre.

Ce satellite comporte un corps central 3 auquel sont associés trois axes définissant un repère de référence direct lié au satellite:
- un axe X tangent à l'orbite 2 et de même sens que la vitesse de parcours de l'orbite: il est classiquement appelé axe de roulis;
- un axe Y perpendiculaire au plan de l'orbite 2 et orienté dans le sens Nord-Sud de la Terre: il est classiquement appelé axe de tangage; et
- un axe Z perpendiculaire aux axes X et Y et orienté vers la Terre: il est classiquement appelé axe de lacet.

Sur certains satellites, ce système d'axe roulis-tangage-lacet peut être orienté différemment par rapport à l'orbite et/ou la terre en fonction des impératifs liés à la mission. Dans ces cas, l'invention est également applicable même si l'orientation du satellite est variable au cours de la mission.

Ce satellite comporte un dispositif de contrôle d'attitude (voir plus loin) grâce auquel il est stabilisé le long de l'orbite 2 autour de ces trois axes.

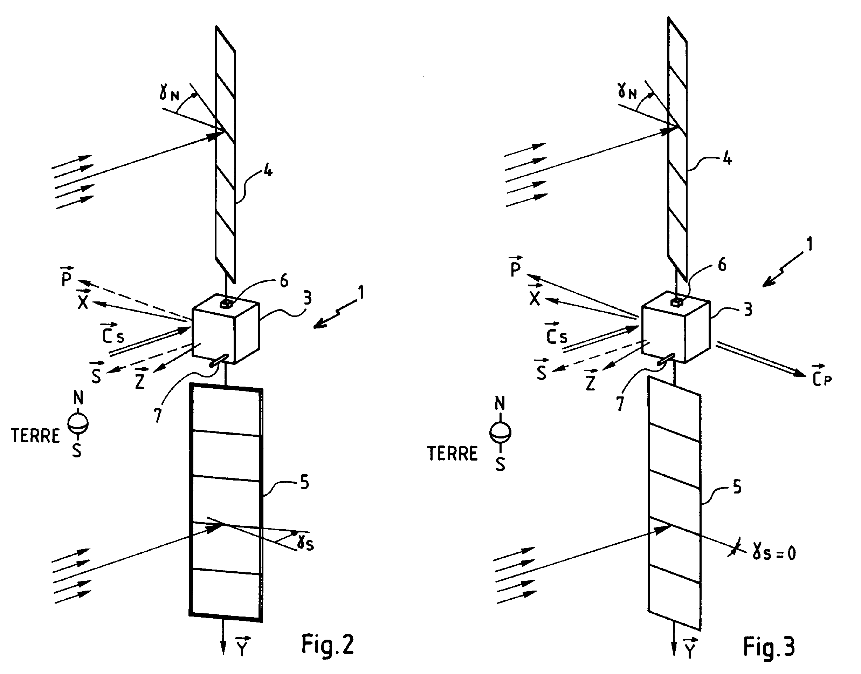

Il comporte par ailleurs (voir aussi les figures 2 et 3) un générateur solaire comportant deux ailes 4 et 5 s'étendant respectivement vers le Nord et vers le Sud et orientables par rapport au corps 3 autour de l'axe Y sous l'action de deux moteurs d'entraînement commandables séparément, de tout type connu approprié dont l'un, porté sur la face Nord du corps 3, est désigné par la référence 6 : ces moteurs sont normalement destinés à maintenir ces ailes sensiblement en regard du Soleil, perpendiculairement à ses rayons.

En pratique le satellite comporte également divers appendices (tels que antennes...) fixes ou à peu près fixes dont l'exposition à la pression de radiation solaire provoque des couples perturbateurs autour des axes X et Z qui s'ajoutent à ceux résultant d'une éventuelle dissymétrie volontaire ou non du générateur solaire.

On définit dans le plan orbital X-Z un axe S qui est la projection dans ce plan d'un vecteur orienté depuis le satellite vers le Soleil, ainsi qu'un axe P perpendiculaire à l'axe S et tel que le repère (P, Y, S) soit direct.

Il est à noter que le repère orthonormé direct (X, Y, Z) lié au satellite tourne par rapport au repère inertiel (P, Y, S) autour de l'axe Y à raison d'un tour par orbite (un tour par jour dans le cas d'une orbite géostationnaire).

Le satellite comporte également un ensemble de détecteurs adapté à mesurer l'attitude du satellite, dont en général au moins un détecteur terrestre 7 (par exemple du type à infrarouges) adapté à mesurer l'attitude en roulis et en tangage, et le plus souvent des détecteurs solaires, voire stellaires, pour mesurer, si nécessaire, notamment l'attitude en lacet.

On ne se préoccupera dans la suite que du contrôle en attitude du satellite autour de ses axes en roulis et en lacet, le contrôle d'attitude en tangage se faisant par tout moyen connu approprié (non représenté) par exemple du type à variation du moment cinétique. Il peut également y avoir un dispositif d'amortissement de nutation qui, ne faisant pas non plus partie de l'invention, ne sera pas décrit plus en détail.

L'invention tire parti de ce que la pression de radiation solaire (ou pression solaire, en raccourci) peut, selon l'orientation des deux ailes du générateur solaire, générer deux types de couples dans le plan orbital, selon les axes S et P respectivement (on appelera dans la suite $\gamma_N$ et $\gamma_S$ les dépointages respectifs de l'aile Nord et de l'aile Sud par rapport à leur orientation nominale face au rayonnement solaire) :

- si les ailes 4 et 5 sont dépointées d'angles égaux mais opposés (voir la figure 2) la pression de radiation solaire induit un couple $C_S$ de "moulin à vent" parallèle à l'axe S;
- si une seule aile (ici l'aile 4) est dépointée tandis que l'autre aile reste dans son orientation nominale (voir la figure 3) la pression de radiation solaire induit un couple $C_P$ de "déséquilibre" parallèle à l'axe P, toujours accompagné d'un couple parasite $C'_S$ Parallèle à l'axe S.

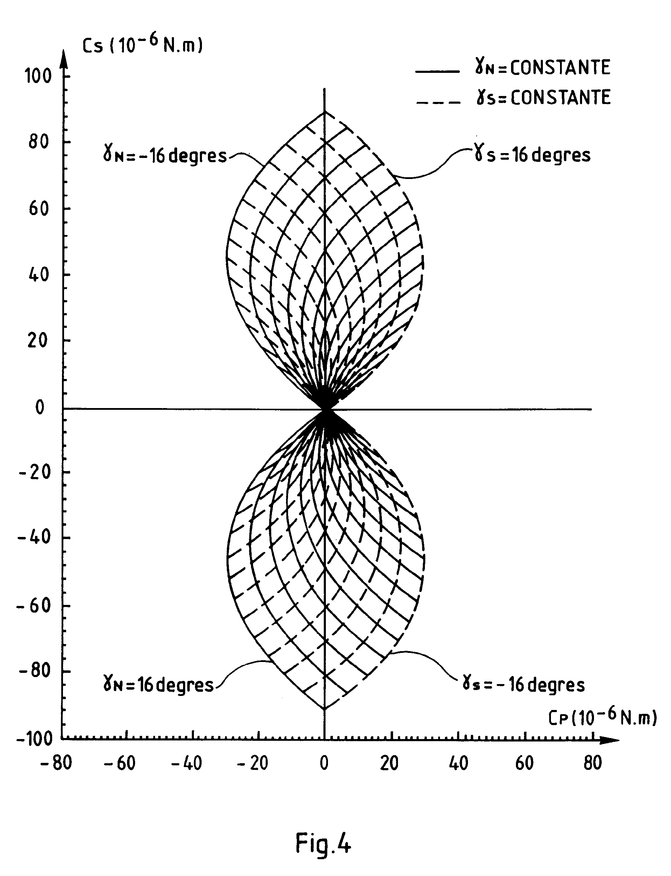

En combinant ces deux types de dépointage, on peut obtenir une grande variété de couples possibles ($C_S$, $C_P$) dont le lieu peut être représenté par les surfaces paramétrées apparaissant sur le graphique de la figure 4, avec deux lobes symétriques par rapport à chacun des deux axes de coordonnées et qui sont bordés par des lignes correspondant aux angles de dépointage maximum autorisé.

Cette figure 4, qui est une représentation paramétrée de la capacité de couple solaire (couple qu'il est possible d'obtenir à partir de la pression de radiation solaire) correspond à un satellite du type EUTELSAT 2 choisi ici en tant qu'exemple, pour lequel des dépointages jusqu'à 16° de part et d'autre des positions nominales des ailes sont autorisés.

En pratique le dépointage maximal autorisé varie selon les satellites entre 3° et 20°; il en résulte de grandes différences pour ces satellites entre les amplitudes de couples réalisables, mais cela permet dans tous les cas de tirer parti de la pression de radiation solaire pour le contrôle d'attitude en roulis et en lacet. Il est rappelé que le dépointage maximal autorisé dépend de la perte maximale de puissance électrique que l'on accepte pour le générateur solaire.

La forme du graphique de la figure 4 varie bien sûr avec la géométrie et la structure des ailes du générateur solaire (éventuelle dissymétrie de ces ailes par exemple....).

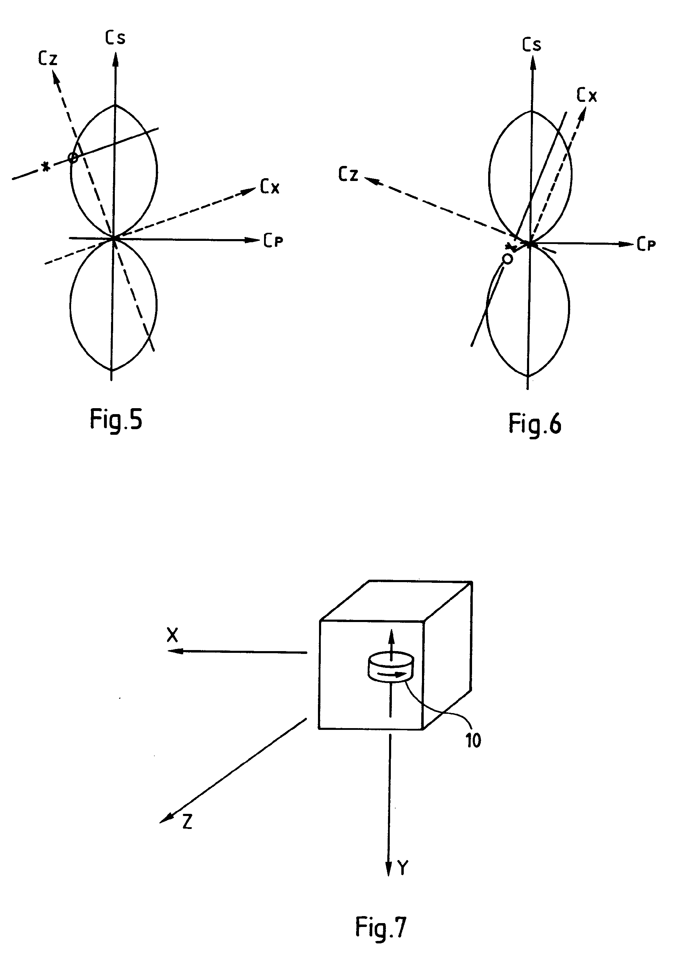

Les figures 5 et 6 sont des graphiques similaires à celui de la figure 4, sur lesquels ont été reportés deux repères de coordonnées ($C_X$, $C_Z$) de même origine que le repère de coordonnées ($C_P$, $C_S$) mais qui en sont décalés angulairement. De même $C_P$ et $C_S$ définissent les composantes d'un couple donné selon les axes P et S, $C_X$ et $C_Z$ définissent les composantes de ce couple selon deux axes perpendiculaires $\underline{x}$ et $\underline{z}$ du plan orbital, présentant par rapport à P et S le même décalage angulaire que celui précité entre les repères de coordonnées.

Ces axes $\underline{x}$ et $\underline{z}$ sont de préférence (mais pas obligatoirement) fixes par rapport aux corps de satellite et sont tels que :

- $\underline{x}$ est un axe sur lequel on peut tolérer une erreur de couple de pilotage pour l'une des raisons suivantes:
  . l'erreur sur la composante $C_X$ du couple entraîne une erreur d'attitude acceptable vis-à-vis des spécifications imposées au satellite,
  . l'erreur sur la composante $C_X$ du couple est compensable, par exemple par un couple produit par un éventuel dispositif d'orientation de moment cinétique ou d'actionnement (magnétique ou ionique par exemple) dont le satellite serait par ailleurs muni.
- $\underline{z}$ est, au contraire, un axe sur lequel on ne peut pas tolérer une erreur, de couple de pilotage par exemple, pour l'une ou plusieurs des raisons suivantes:
  . l'erreur sur la composante $C_Z$ du couple entraîne une erreur d'attitude inacceptable vis-à-vis des spécifications,
  . l'erreur sur la composante $C_Z$ du couple n'est pas compensable, par exemple par un couple produit par un éventuel dispositif d'orientation de moment cinétique du satellite parce que, par exemple, cette composante du moment cinétique n'existe pas ou est saturée,

7

. il n'y a pas de dispositif d'actionnement suivant cet axe où celui-ci est indisponible.

La connaissance de ces axes $\underline{x}$ et $\underline{z}$ qui sont en pratique parallèles aux axes X et Z (ou Z et X) permet un choix optimum d'un couple de correction à appliquer au satellite par une orientation appropriée des ailes du générateur solaire à partir du couple théorique nécessaire pour la correction de l'attitude en roulis et en lacet du satellite: on recherche un point du lieu ou de l'ensemble des couples réalisable (double lobe du graphique $C_P$, $C_S$) qui a la même composante $C_Z$ que le couple théorique (repéré par un astérisque aux figures 5 et 6) et dont la composante $C_X$ soit la plus proche de celle de ce couple théorique.

Toutefois, l'orientation des axes $\underline{x}$ et $\underline{z}$ par rapport aux X et Z peut être différente voire variable dans le temps.

Deux cas peuvent se présenter :
- s'il est possible d'appliquer exactement la composante $C_x$ du couple théorique autour de l'axe $\underline{x}$ les couples solaires permettront :
   . de piloter complètement l'attitude en roulis et lacet du satellite, et éventuellement
   . d'approcher de sa valeur nominale la (ou les) composante(s) roulis-lacet d'un éventuel moment cinétique orientable dont le satellite serait muni, ou
   . d'annuler la vitesse de la (ou des) roue(s) à réaction dans le plan roulis-lacet lorsque le satellite en est muni,
- s'il n'est pas possible d'appliquer exactement la composante $C_X$ du couple théorique autour de l'axe $\underline{x}$, on détermine la valeur possible de $C_X$ la plus proche de la valeur théorique, l'écart de couple de pilotage étant soit compensé à l'aide de l'orientation du moment cinétique, soit toléré en tant qu'erreur d'attitude, soit compensé par un autre dispositif d'actionnement.

Des diminutions notables d'écart entre couples solaires théoriques et obtenu sont possibles dès lors qu'on autorise une petite marge d'erreur contrôlée sur le couple $C_Z$ autour de $\underline{z}$ qui reste sans incidence sur la précision du pilotage.

Une fois choisies les composantes de couple à appliquer autour des axes $\underline{x}$ et $\underline{z}$ on lit sur le graphique de la figure 4 qui traduit la corrélation entre couples possibles et angles de dépointage (cette opération pouvant être réalisée par un algorithme):
- les angles de dépointage $\gamma_S$ et $\gamma_N$ sur les ailes du générateur solaire qui correspondent à la création de ces composantes de couple et en envoie des ordres correspondants de commande aux moteurs d'entraînement des ailes du générateur solaire,
- des éventuelles composantes de variation de moment cinétique à appliquer à des roues à réaction,
- des éventuelles composantes à générer par les actionneurs.

Il est à préciser que :
- si le couple autour de l'axe $\underline{z}$ dépasse la capacité du système, on prend donc le couple maximal possible,
- la logique de commande ci-dessus peut être améliorée par l'estimation des couples inertiels et de l'angle de lacet à l'aide d'un estimateur de type LUENBERGER par exemple (décrit dans les articles cités ci-après),
- l'ensemble de la logique peut s'effectuer à bord du satellite, ou en passant par le sol, ou en utilisant partiellement les deux. Cela permet en particulier d'appliquer la présente invention à des satellites qui n'étaient pas conçus pour cela, même après leur lancement.

Lorsqu'il y a des roues à réaction, la loi de désaturation de celles-ci qui détermine le couple, du même ordre de grandeur que les couples solaires réalisables, nécessaire pour annuler la vitesse de ces roues ou la composante roulis-lacet du moment cinétique peut être par exemple une loi de type PI (proportionnelle-intégrale)

$$C = - K.M - Ki. \int Mdt$$

où

M est la composante roulis-lacet du moment cinétique du satellite,
∫Mdt est l'intégrale de M par rapport au temps,
C est le couple que l'on demande au pilotage solaire d'appliquer à la (ou les) roue(s),
K et Ki sont des coefficients choisis en fonction des caractéristiques du satellite (notamment capacité de couple solaire) et des performances souhaitées. Une telle désaturation a lieu au moins en partie dès lors que le couple solaire nécessaire au contrôle d'attitude roulis-lacet reste à l'intérieur des lobes du graphique de la figure 4.

La roue est classiquement équipée d'un compensateur qui permet de transformer le couple C demandé à la roue en un moment cinétique réalisé.

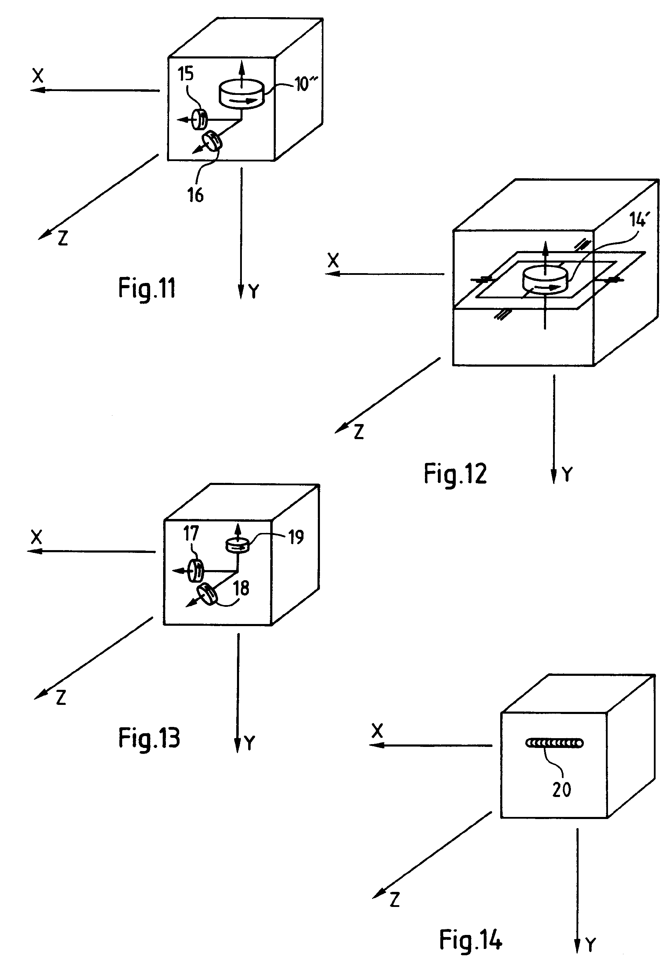

Les figures 7 à 13 représentent sept conceptions parmi celles possibles pour la disposition de roues cinétiques et/ou à réaction, disponibles pour le contrôle d'attitude en roulis et en lacet du satellite 1 et la figure 14 représente un autre type d'actionneurs:

- la figure 7 correspond à une conception à moment cinétique fixe parallèle à l'axe de tangage obtenu grâce à une roue cinétique 10 orientée parallèlement à cet axe de tangage,

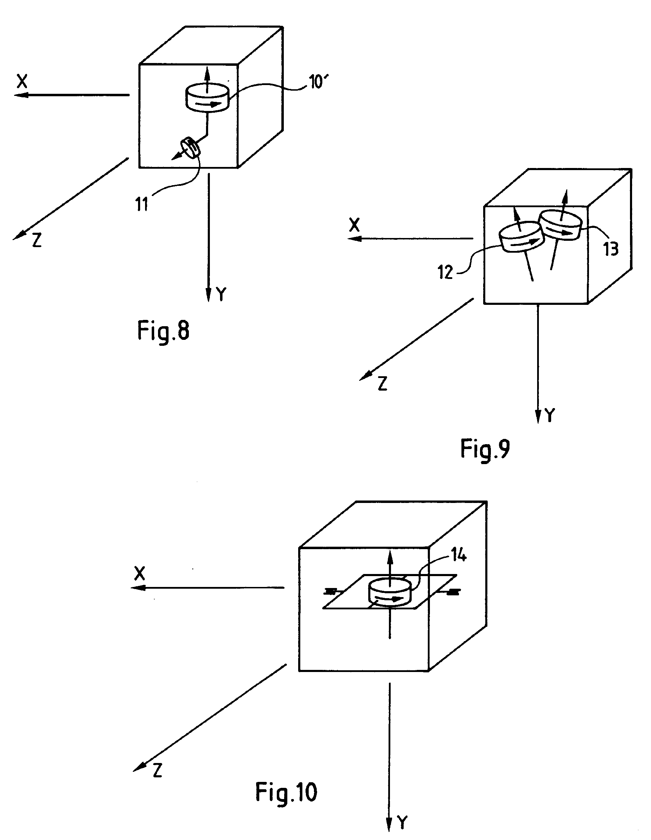

- la figure 8 correspond à une conception à moment cinétique orientable suivant un axe obtenu grâce à une roue cinétique 10′ orientée parallèlement à l'axe de tangage et à une roue à réaction 11 tournant autour d'un axe du plan orbital, par exemple autour de l'axe Z,
- la figure 9 correspond à une conception à moment cinétique orientable suivant un axe obtenu grâce à deux roues cinétiques 12 et 13 orientées de part et d'autre de l'axe de tangage dans le plan dans lequel le moment cinétique est orientable, par exemple le plan Y-Z,
- la figure 10 correspond à une conception à moment cinétique orientable suivant un axe obtenu grâce à une roue cinétique 14 montée sur pivot simple. La roue 14 est nominalement orientée parallèlement à l'axe de tangage. Le pivot peut l'orienter dans un plan contenant l'axe de tangage, par exemple le plan Y-Z,
- la figure 11 correspond à une conception de moment cinétique orientable suivant plusieurs axes obtenu grâce à une roue cinétique 10″ orientée parallèlement à l'axe de tangage et à une pluralité de roues à réaction permettant de créer des couples de réaction suivant n'importe quelle direction dans le plan roulis-lacet, ici deux roues à réaction 15 et 16 orientées selon les axes X et Z respectivement,
- la figure 12 correspond à une conception à moment cinétique orientable suivant plusieurs axes obtenu grâce à une roue cinétique 14′ montée sur pivots multiples. La roue 14′ est nominalement orientée parallèlement à l'axe de tangage. Les pivots peuvent l'orienter suivant n'importe quelle direction proche de l'axe de tangage. Ici deux pivots sont représentés,
- la figure 13 correspond à une conception à moment cinétique faible d'orientation quelconque, faisant intervenir une pluralité de roues de réaction permettant de créer des couples de réaction suivant n'importe quelle direction dans le plan roulis-lacet, ici deux roues 17 et 18 respectivement orientées selon les axes X et Z respectivement (une troisième roue à réaction 19 est également représentée dans le cas considéré). L'ensemble de détecteurs d'attitude du satellite fournit dans la plupart des cas de ce type des mesures selon les trois axes (non nécessairement simultanées), le détecteur terrestre étant alors, par exemple, complété notamment par un détecteur stellaire pointé sur l'étoile polaire,
- la figure 14 correspond à un satellite équipé d'un ou plusieurs actionneurs continus capable(s) de délivrer des couples de contrôle dans le plan roulis-lacet; ici une bobine 20 orientée suivant l'axe X produit un dipôle magnétique suivant l'axe X qui, par interaction avec le dipôle terrestre orienté approximativement suivant l'axe Y, applique au satellite un couple orienté suivant l'axe Z.

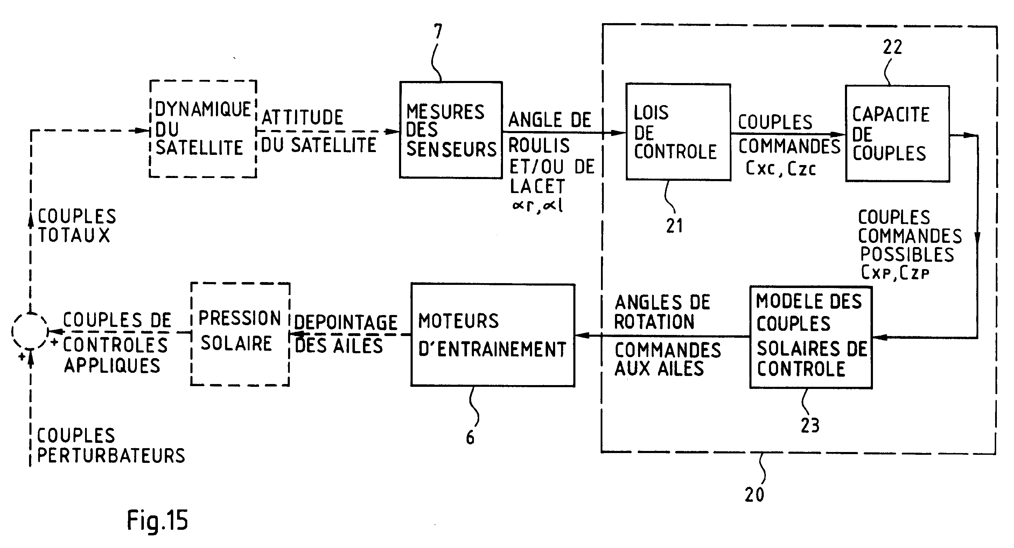

Les logiques de contrôle associées aux figures 7 à 14 sont schématisées aux figures 15 à 18 sur lesquelles:

- la référence 20 (20′, 20″ ou 20‴) représente une zone de calcul faisant partie du calculateur de bord, mais pouvant en variante être partagée entre ce calculateur de bord et un calculateur au sol, voire entièrement située dans ce dernier
- la référence 21 (21′, 21″ ou 21‴) désigne au sein de la zone 20 un bloc dans lequel sont stockées des lois de commande adaptées à calculer à partir des angles de roulis $\alpha_r$ et/ou de lacet $\alpha_l$ des couples théoriques $C_{xc}$ et $C_{zc}$,
- la référence 22 (22′, 22″ ou 22‴) est un bloc dans lequel est stocké un algorithme de calcul correspondant au graphique de figures 4, 5 et 6 et qui, à partir de la connaissance des axes $\underline{x}$ et $\underline{z}$ (qui lui parviennent par exemple des détecteurs 5), déterminent les composantes possibles de couple $C_{xp}$ et $C_{zp}$,
- la référence 23 (23′, 23″ ou 23‴) est un bloc contenant un modèle des couples solaires de contrôle et adapté à élaborer à partir de ces composantes possibles des ordres de commande destinés aux moteurs d'entraînement 6,
- la référence 24′ (ou $24''_x$ et $24''_z$) est un bloc contenant un programme de désaturation de roue(s), adapté à partir de la vitesse de rotation de la roue considérée, à déterminer le couple qu'il faudrait pouvoir appliquer au satellite pour désaturer la roue,
- la référence 25′ (ou $25''_x$ et $25''_z$) est un bloc contenant un programme adapté à déterminer le moment cinétique qu'il faut faire générer par la roue pour obtenir un couple à appliquer en complément du couple solaire pour obtenir les couples théoriques,
- la référence 25‴ est un bloc de commande de l'actionneur continu,
- la référence 26′ (ou $26''_x$ et $26''_z$) désigne la boucle d'asservissement de la roue correspondante,
- la référence 27′ (ou $27''_x$ et $27''_z$) désigne un tachymètre associé à la roue considérée,
- les lignes en pointillés sont fictives, désignant des relations de cause à effet faisant intervenir des blocs en pointillés également fictifs et désignant des phénomènes physiques.

La logique du contrôle pour le cas d'attitude à moment cinétique fixe est résumée dans la figure 15.

La mesure de l'attitude en roulis par le détecteur terrestre 5 du satellite est utilisée dans une loi de commande 21 qui détermine les couples à appliquer dans le plan roulis-lacet nécessaire pour piloter l'attitude du satellite. On peut dans le cas de cet exemple, utiliser une loi de type "WHECON", telle que décrite dans le document MAGNETIC DESATURATION OF A MOMENTUM BIAS SYSTEM - K.L. LEBSOCK - Journal of guidance and control Vol.6 n° 6 Nov.83).

La commande de couple dans le plan roulis-lacet et la capacité de couple présentée dans la figure 4 sont converties dans le système d'axes (x, z) où $\underline{x}$ est l'axe de roulis, et $\underline{z}$ l'axe de lacet. En effet, on peut atteindre la performance de pointage en roulis en appliquant correctement le couple autour de l'axe $\underline{z}$.

Deux cas peuvent se présenter :

- s'il est possible d'appliquer le couple commandé autour de l'axe $\underline{x}$, l'attitude du satellite sera précise en roulis et lacet,
- s'il n'est pas possible d'appliquer le couple commandé autour de l'axe $\underline{x}$, le calculateur détermine la valeur possible la plus proche de la valeur commandée, ce qui entraînera une dérive de l'attitude en lacet. Cette dérive sera d'autant plus limitée que l'on aura autorisé un grand angle de dépointage des ailes.

Il est donc nécessaire de choisir un compromis entre précision de pointage en lacet et perte de puissance électrique du générateur solaire due au dépointage des ailes.

Des améliorations notables de précision de pointage en lacet sont obtenues en additionnant l'erreur de couple autour de l'axe $\underline{x}$ à la commande de couple autour de l'axe $\underline{x}$ suivante ce qui permet de rattraper rapidement une bonne précision en lacet une fois que la commande autour de l'axe $\underline{x}$ redevient possible.

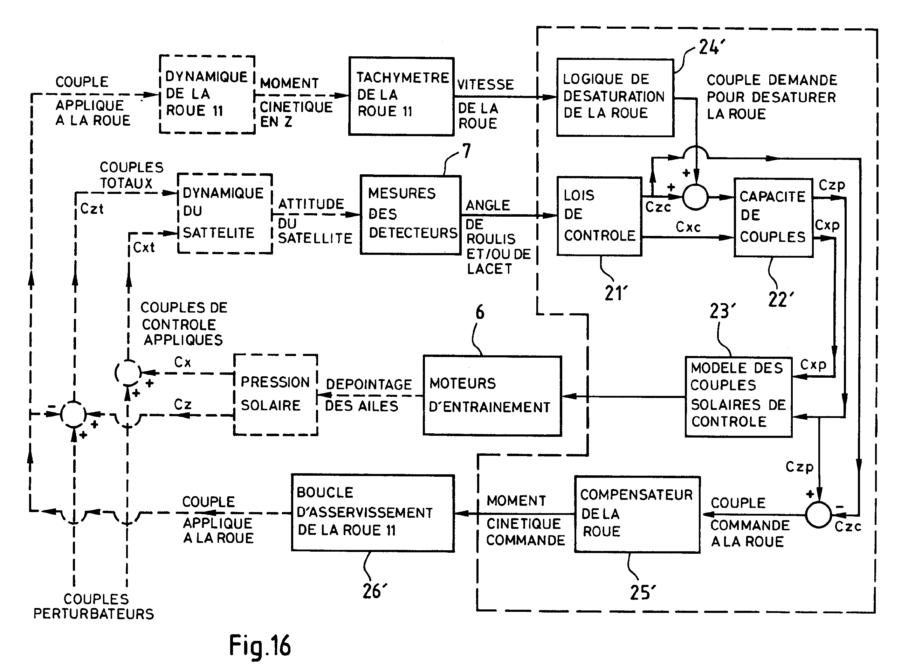

La logique du contrôle d'attitude pour le cas à moment cinétique orientable selon un axe est résumée dans la figure 16.

La mesure de l'attitude par les senseurs du satellite est utilisée dans une loi de commande qui détermine les couples à appliquer dans le plan roulis-lacet nécessaire pour piloter l'attitude du satellite (on peut dans le cas de cet exemple, utiliser une loi de type "WHECON", telle que décrite dans le document MAGNETIC DESATURATION OF A MOMENTUM BIAS SYSTEM - K.L. LEBSOCK- Journal of guidance and control, Vol 6, n° 6, Nov.83). Au couple de pilotage autour de l'axe Z (composante roulis-lacet du moment cinétique) est ajouté le couple nécessaire pour ramener cette composante à zéro.

La commande de couple dans le plan roulis-lacet et la capacité de couple présentée dans la figure 4 sont converties dans un système d'axes ($\underline{x}$, $\underline{z}$) où $\underline{x}$ est l'axe de la composante roulis-lacet du moment cinétique et $\underline{z}$, l'axe perpendiculaire. En effet, une erreur sur le couple autour de l'axe $\underline{x}$ pourra être compensée par la variation de la composante roulis-lacet du moment cinétique.

Deux cas peuvent se présenter:

- s'il est possible d'appliquer le couple commandé autour de l'axe $\underline{x}$, les couples solaires permettront de piloter l'attitude du satellite et d'approcher de sa valeur nominale (nulle ou non) la composante du moment cinétique dans le plan roulis-lacet,
- s'il n'est pas possible d'appliquer le couple commandé autour de l'axe $\underline{x}$, le calculateur détermine la valeur possible la plus proche de la valeur commandée. Dans ce cas l'écart de couple de pilotage est compensé à l'aide des actionneurs du moment cinétique.

L'intégrale de l'écart entre couples solaires commandé et obtenu est d'autant plus importante que le dépointage autorisé aux ailes est faible. Il est donc nécessaire de choisir là aussi un compromis entre la valeur maximale du moment cinétique et la perte de puissance électrique du générateur solaire due au dépointage des ailes.

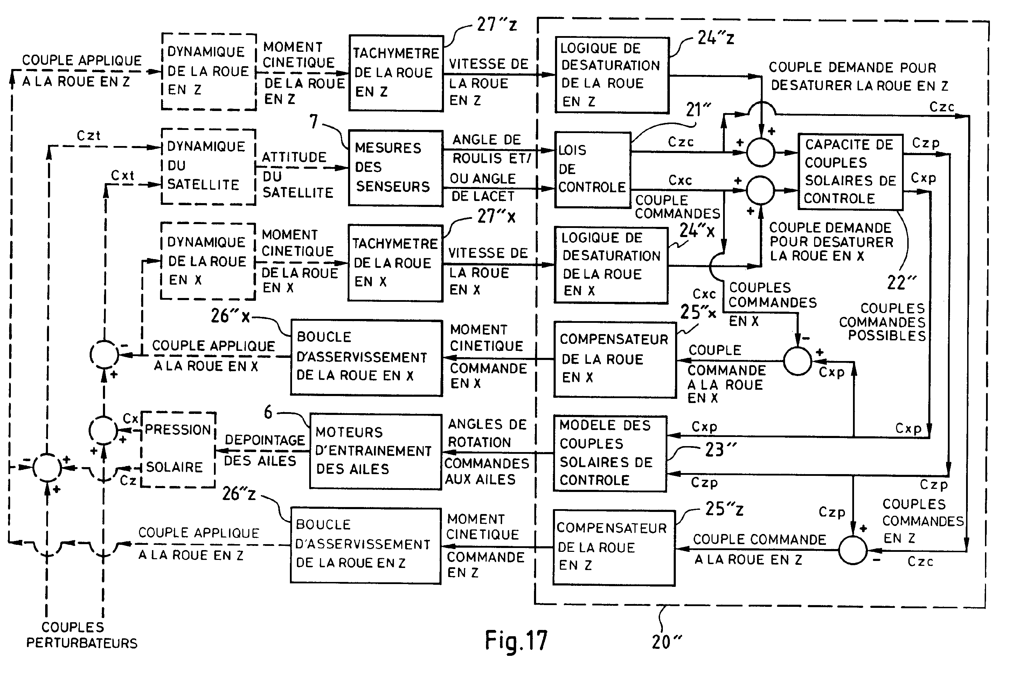

La logique du contrôle d'attitude dans le cas à moment cinétique orientable selon deux (ou plusieurs) axes ou dans le cas d'un moment cinétique à orientation quelconque est résumée dans la figure 17.

La mesure de l'attitude par les senseurs du satellite est utilisée dans une loi de commande qui détermine les couples à appliquer dans le plan roulis-lacet nécessaire pour piloter l'attitude du satellite. On peut, dans le cas de notre exemple, utiliser une loi de type "PID" (Proportionnelle Intégrale Dérivée), telle que décrite dans le document ATTITUDE CONTROL OF THE INFRARED SPACE OBSERVATORY AND ITS PREDECESSOR - R.J. HAMMAN - AAS 84-004). Au couple de pilotage autour des axes X et Z est ajouté le couple nécessaire pour ramener la composante roulis-lacet du moment cinétique à zéro.

La commande de couple dans le plan roulis-lacet et la capacité de couple présentée dans la figure 4 sont converties dans un système d'axes ($\underline{x}$, $\underline{z}$) où $\underline{z}$ est l'axe de la composante roulis-lacet du moment cinétique qui est la plus proche de la saturation. En effet, une erreur sur le couple autour de l'axe $\underline{x}$ pourra être compensée par la variation de la composante roulis-lacet du moment cinétique autour de $\underline{x}$.

Deux cas peuvent se présenter:

- s'il est possible d'appliquer le couple commandé autour de l'axe $\underline{x}$ les couples solaires permettront de piloter l'attitude du satellite, et d'approcher la composante du moment cinétique dans le plan roulis-lacet de sa valeur nominale,

- s'il n'est pas possible d'appliquer le couple commandé autour de l'axe x, le calculateur détermine la valeur possible la plus proche de la valeur commandée. Dans ce cas, l'écart de couple de pilotage est compensé à l'aide des roues à réaction.

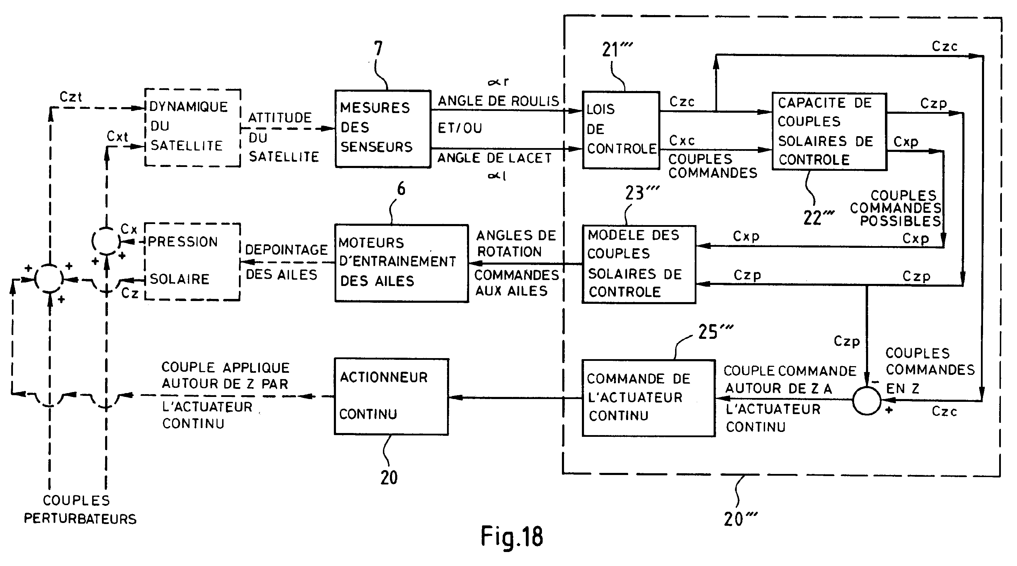

La logique de contrôle pour le cas d'un actionneur continu est présentée à la figure 18. Elle est à rapprocher de celle de la figure 16 à ceci près que l'écart de couple de pilotage est compensé par le (ou les) actionneur(s) continu(s).

L'écart entre couples solaires commandé et obtenu est d'autant plus important que le dépointage autorisé aux ailes est faible. Il est donc nécessaire de choisir un compromis entre la valeur maximale du moment cinétique et la perte de puissance électrique du générateur solaire due au dépointage des ailes.

Ainsi l'invention permet d'utiliser la pression de radiation solaire sur les ailes du générateur photovoltaïque d'un satellite stabilisé autour de ses trois axes avantageusement muni d'au moins un moment cinétique autour d'un axe situé dans le plan roulis-lacet ou plan de l'orbite pour créer des couples dans le plan roulis-lacet permettant d'équilibrer les couples perturbateurs agissant sur le satellite, de piloter son attitude, de désaturer les roues à réaction si le satellite en est pourvu, de désaturer la composante dans le plan roulis-lacet du moment cinétique si le satellite est pourvu d'un moment cinétique orientable, chaque aile étant orientée à l'aide de son moteur d'entraînement.

Pour un satellite de type EUTELSAT 2 choisi en tant qu'exemple équipé de la présente invention et de roue cinétique en V la précision de pilotage autour de l'axe de roulis (X) est égale à 0.01 degré, la précision de pilotage autour de l'axe de lacet (Z) est égale à 0.25 degré :

- pour une perte de puissance du générateur solaire de :

$$
\left.\begin{array}{l}
\bullet \qquad \text{0.25 \% maximum} \\
\bullet \qquad \text{0. 2 \% en moyenne}
\end{array}\right) \text{ sur l'aile la plus dépointée}
$$

- en présence de couple perturbateurs de l'ordre de :
  - . 5. 10-6 Newton.mètre liés aux axes satellite
  - . 6.5 10-6 Newton.mètre liés aux axes soleil (axes inertiels)
  - . 1.5 10-6 Newton.mètre en deuxième harmonique par rapport à la période orbitale
- sans aucune perte de masse.

Sur EUTELSAT 2, le contrôle d'attitude en roulis-lacet consomme environ 9 kilogrammes d'ergol durant les 7 ans de durée de vie du satellite. Ces 9 kilogrammes pourraient être économisés par l'application de la présente invention. La perte de puissance électrique du générateur solaire est négligeable devant les marges de puissance électrique nécessaires pour faire face à la dégradation du générateur solaire et aux variations saisonnières de l'ensoleillement (solstices et éclipses lors des équinoxes).

En fait, le procédé précité est bien sûr discret, avec un pas qui est avantageusement de l'ordre de 100 s, ce pas pouvant être, suivant le cas, diminué jusqu'à 0,5 seconde environ ou augmenté jusqu'à plus de 1000 secondes.

Il va de soi que la description qui précède n'a été proposée qu'à titre d'exemple non limitatif et que de nombreuses variantes peuvent être proposées par l'homme de l'art sans sortir du cadre de l'invention.

On appréciera que, dès lors qu'il y a des roues à réaction, on peut, deux fois par jour, les accélérer puis les désaturer.

Il est à noter que la présence d'un générateur de moment cinétique orientable sur les satellites tend à se généraliser sur les satellites pour en augmenter la capacité d'adaptation ("versatility" en anglais), par exemple pour pouvoir modifier la latitude de la zone d'observation d'un satellite géostationnaire, ou pour pouvoir amortir la nutation après chaque allumage des tuyères, dans le cas d'un contrôle d'attitude par les tuyères. De la sorte, l'invention permet de prolonger la durée de vie du satellite, en cessant les corrections d'attitude par tuyères et en tirant parti de la disponibilité au moins partielle du générateur de moment cinétique normalement destiné à cette compensation de nutation ou à toute autre fonction.

De façon très générale on peut noter que, de façon préférée l'invention propose d'utiliser des actionneurs dont le satellite est muni pour compenser les écarts de couple selon l'axe x (et éventuellement z) entre les couples de commande théorique et réalisable.

Outre des roues (ou des masses tournantes, voir ci-dessus) ces actionneurs peuvent être:
- de type magnétique,
- de type à éjection de matière,
- de type à échange de moment cinétique entre diverses parties du satellite mobiles les unes par rapport aux autres,

- de type à échange de quantité de mouvement entre diverses parties du satellite mobile les unes par rapport aux autres,
- de type aérodynamique,
- de type utilisant le gradient de gravité.

**Revendications**

1. Procédé de contrôle de l'attitude en roulis (X) et en lacet (Z) d'un satellite artificiel (1) par ailleurs stabilisé en tangage (Y) sur son orbite (2) dans le système solaire et comprenant un corps de satellite (3) portant sur des faces dites Nord et Sud deux ailes de générateur solaire (4, 5) normalement dirigées approximativement vers le Soleil, orientables indépendamment l'une de l'autre autour d'un axe Nord-Sud dit de tangage par des moteurs d'entraînement (6) commandables séparément et comportant un système de mesure d'attitude (7) adapté à donner au moins une mesure de l'attitude en roulis ou en lacet, ce procédé comportant les étapes suivantes :
   . au préalable :
      - on sélectionne deux axes géométriques $\underline{x}$ et $\underline{z}$ du satellite qui sont contenus dans le plan des axes de roulis et de lacet, à l'axe $\underline{z}$ étant associée une valeur maximale d'erreur de couple de pilotage tolérable bien plus faible que la valeur maximale d'erreur de couple de pilotage tolérable sur l'axe $\underline{x}$, et
      - on établit une loi de corrélation entre des doublets de valeurs possibles d'angles de dépointage $\gamma_N$ et $\gamma_S$ des ailes (4, 5) respectivement portées sur les faces Nord et Sud du corps de satellite par rapport à une configuration nominale de ces ailes dans laquelle ces ailes sont face au Soleil, et des couples solaires réalisables ($C_s / C_p$) en résultant dans le plan des axes de roulis et de lacet du fait de la pression de radiation solaire, et on détermine le lieu de ces couples réalisables ;
   . puis de façon cyclique selon une fréquence donnée constante ou non au cours du temps pendant que le satellite décrit son orbite :
      - on détermine par calcul (21, 21′, 21″, 21‴) à partir de signaux de mesure instantanés issus du système de mesure d'attitude le couple de commande théorique, éventuellement nul, dans le plan des axes de roulis et de lacet nécessaire pour annuler l'erreur d'attitude instantanée du satellite, éventuellement nulle, dans le plan des axes de roulis et de lacet,
      - on recherche dans ce lieu des couples solaires réalisables, un couple de commande réalisable ayant, par rapport à l'axe $\underline{z}$ à l'instant considéré, une composante sensiblement identique à celle du couple de commande théorique et, par rapport à l'axe $\underline{x}$ à ce même instant considéré, une composante aussi proche que possible de la composante du couple de commande théorique, et on déduit par cette loi de corrélation le doublet associé de valeurs possibles d'angles de dépointage, et
      - on commande (23, 23′, 23″, 23‴) les moteurs d'entraînement (6) en sorte d'amener les ailes de générateur solaire à ce doublet de valeurs d'angles de dépointage.

2. Procédé selon la revendication 1, caractérisé en ce que l'on commande des actionneurs (11, 12, 13, 14, 14′, 15, 16, 18, 20) dont le satellite est muni pour générer des couples de compensation définis par les écarts de couple selon au moins l'axe $\underline{x}$ entre le couple de commande théorique et le couple de commande réalisable choisi pour la corrélation.

3. Procédé selon la revendication 1 ou la revendication 2, caractérisé en ce que, le satellite comportant un système (10) générateur de moment cinétique à composantes fixes dans le plan des axes de roulis et de lacet, les axes $\underline{x}$ et $\underline{z}$ sont choisis confondus respectivement avec les axes de roulis et de lacet.

4. Procédé selon la revendication 3, caractérisé en ce que ce système générateur de moment cinétique comporte une roue cinétique (10) d'axe parallèle à l'axe de tangage Nord-Sud.

5. Procédé selon la revendication 1 ou la revendication 2, caractérisé en ce que, le satellite comportant un système générateur de moment cinétique orientable (10, 10′, 10″, 11, 12, 13, 14, 14′, 15, 16, 17, 18, 19) éventuellement nul à une composante variable selon au moins un axe du plan des axes de roulis et de lacet, l'axe $\underline{x}$ est choisi confondu avec cet axe et:
   - lorsque les couples de commande théorique et réalisable sont différents, on applique à ce système générateur de moment cinétique un signal de commande (25', 25"$_x$, 25"$_z$) adapté à provoquer une variation de ladite composante variable propre à générer un couple additionnel égal à la différence entre les couples de commande théorique et réalisable,

- lorsque les couples de commande théorique et réalisable sont égaux, on calcule (24', 24"$_x$, 24"$_z$) la valeur d'un couple de désaturation propre à faire varier cette composante variable du moment cinétique jusqu'à une valeur nominale prédéterminée, on détermine par calcul un couple de commande théorique global égal à la somme du couple de commande théorique et du couple de désaturation, on recherche dans ce lieu des couples possibles, un second couple de commande réalisable ayant, par rapport à l'axe z, une composante sensiblement égale à celle du couple de commande théorique et, par rapport à l'axe x une composante aussi proche que possible de celle du couple de commande théorique global, on en déduit par la loi de corrélation un second doublet de valeurs possibles d'angles de dépointage que l'on impose ensuite aux ailes du générateur solaire, et on impose (25', 25"$_x$, 25"$_z$) au système générateur de moment cinétique une variation de cette composante variable adaptée à générer un couple de compensation égal mais opposé à la différence entre le second couple de commande réalisable et le couple théorique de commande, ces deux étapes pouvant être réalisées en parallèle.

6. Procédé selon la revendication 5, caractérisé en ce que ce système générateur de moment cinétique comporte une roue à réaction (11) orientée selon l'axe de composante variable ou dont l'axe est contenu dans le plan défini par l'axe de tangage et l'axe de composante variable.

7. Procédé selon la revendication 6, caractérisé en ce que ce système comporte en outre une roue cinétique (10') sensiblement orientée selon l'axe de tangage.

8. Procédé selon la revendication 6 ou la revendication 7, caractérisé en ce que cette roue à réaction (11) est orientée selon l'axe de lacet, l'axe x étant choisi parallèle à cet axe de lacet et l'axe z étant choisi parallèle à l'axe de roulis.

9. Procédé selon la revendication 5, caractérisé en ce que ce système générateur de moment cinétique (10", 15, 16, 17, 18, 19, 14') est adapté à générer un moment cinétique à une pluralité de composantes selon des axes différents dans le plan des axes de roulis et de lacet, les axes x et z étant définis à chaque instant de façon à minimiser l'écart entre ces composantes variables et une valeur prédéterminée associée à chacune.

10. Procédé selon la revendication 9, caractérisé en ce que ce système générateur de moment cinétique comporte une pluralité de roues à réaction (15, 16) dont les axes sont compris respectivement dans les plans définis par l'axe de tangage d'une part, l'un des axes de composante variable du moment cinétique d'autre part.

11. Procédé selon la revendication 9, caractérisé en ce que ce système générateur de moment cinétique comporte une roue (14') dont l'axe de rotation présente une pluralité de degrés de liberté de rotation d'axes perpendiculairement aux axes de composantes variables.

12. Procédé suivant la revendication 11 caractérisé en ce que l'axe de la roue (14') est nominalement orienté selon l'axe de tangage du satellite.

13. Procédé suivant l'une quelconque des revendications 11 ou 12, caractérisé en ce que la roue (14') présente deux degrés de liberté autour des axes de roulis et de lacet du satellite.

14. Procédé selon la revendication 5 ou la revendication 9, caractérisé en ce que ce système générateur de moment cinétique (17, 18, 19) est adapté à générer un moment cinétique à deux composantes variables selon des axes différents dans le plan des axes de roulis et de lacet, les axes x et z étant choisis confondus avec ces deux axes de composante variable et étant substituables l'un à l'autre, l'axe z étant choisi à tout instant confondu avec celui des deux axes correspondant à celle des deux composantes variables qui est la plus éloignée d'une valeur nominale prédéterminée associée à cet axe.

15. Procédé selon l'une quelconque des revendications 9, 10 ou 14, caractérisé en ce que ce système gé-

EP 0 435 708 B1

nérateur de moment cinétique éventuellement nul comporte deux roues à réaction (15, 16, 17, 18) orientées respectivement selon les axes de roulis et de lacet.

16. Procédé selon la revendication 15, caractérisé en ce que ce système comporte également une roue de réaction ou une roue cinétique (10, 19) sensiblement orientée selon l'axe de tangage.

17. Procédé selon la revendication 5, caractérisé en ce que le système générateur de moment cinétique comporte deux roues cinétiques (12, 13) disposées en V, c'est-à-dire dont les axes sont situés, d'une part dans le plan défini par l'axe de tangage et l'axe de composante variable, d'autre part à peu près symétriquement de part et d'autre de l'axe de tangage.

18. Procédé selon la revendication 17, caractérisé en ce que l'axe de composante variable est orienté selon l'axe de lacet, l'axe x étant choisi parallèle à cet axe de lacet et l'axe z étant choisi parallèle à l'axe de roulis.

19. Procédé selon la revendication 5, caractérisé en ce que le système générateur de moment cinétique comporte une roue cinétique (14) dont l'axe présente un degré de liberté de rotation d'axe perpendiculaire à l'axe de composante variable.

20. Procédé selon la revendication 19, caractérisé en ce que l'axe de la roue (14) est orienté nominalement selon l'axe de tangage du satellite.

21. Procédé selon la revendication 19 ou la revendication 20, caractérisé en ce que l'axe de composante variable est orienté selon l'axe de lacet, l'axe x étant choisi parallèle à l'axe de lacet, et l'axe z étant choisi parallèle à l'axe de roulis, l'axe de pivot étant orienté suivant l'axe de roulis.

22. Procédé selon l'une quelconque des revendications 1 à 21, caractérisé en ce que la période de cycle est comprise entre 0,5 seconde et 1000 secondes approximativement.

**Patentansprüche**

1. Verfahren zur Lagesteuerung bezüglich Roll- (X) und Gierbewegungen (Z) eines künstlichen Satelliten (1), der außerdem auf seinem Orbit (2) im Sonnensystem bezüglich Nickbewegungen (Y) stabilisiert ist und einen Satellitenkörper (3) umfaßt, der auf Nord- und Südseite genannten Seiten zwei Solargeneratorflügel (4, 5) trägt, die normalerweise annähernd auf die Sonne zu gerichtet sind und unabhängig voneinander durch getrennt steuerbare Antriebsmotoren (6) um eine Nickachse genannte Nord-Süd-Achse richtbar sind, und der ein Lagemeßsystem (7) aufweist, das so ausgelegt ist, daß es mindestens eine Messung der Rollage oder der Gierlage liefert, wobei dieses Verfahren die folgenden Schritte umfaßt:
   . zuerst:
      - wählt man zwei geometrische Achsen x und z des Satelliten, die in der Ebene der Rollachse und der Gierachse enthalten sind, wobei der Achse z ein zulässiger Höchstwert der Lenkmomentabweichung zugeordnet ist, der viel kleiner als der zulässige Höchstwert der Lenkmomentabweichung auf der Achse x ist, und
      - erstellt man eine Korrelationsgesetzmäßigkeit zwischen Dubletts von möglichen Werten von Richtabweichungswinkeln $\gamma_N$ und $\gamma_S$ der auf der Nordseite bzw. der Südseite des Satellitenkörpers getragenen Flügel (4, 5) bezüglich einer Nennkonfiguration dieser Flügel, in der diese Flügel der Sonne zugewandt sind, und realisierbaren Sonnenmomenten ($C_S$, $C_P$), die sich in der Ebene der Rollachse und der Gierachse infolge des Sonnenstrahlungsdrucks daraus ergeben, und bestimmt man den Ort dieser realisierbaren Momente;
   . dann nimmt man zyklisch mit einer gegebenen konstanten oder nichtkonstanten Frequenz in der Zeit, während der der Satellit seinen Orbit beschreibt, folgendes vor:
      - man bestimmt durch Berechnen (21, 21', 21'', 21''') ausgehend von vom Lagemeßsystem kommenden momentanen Meßsignalen das theoretische Steuermoment von gegebenenfalls Null in der Ebene der Rollachse und der Gierachse, das erforderlich ist, um die momentane Lageabweichung des Satelliten, die gegebenenfalls Null beträgt, in der Ebene der Rollachse und der Gierachse aufzuheben,
      - man sucht in diesem Ort der realisierbaren Sonnenmomente ein realisierbares Steuermoment,

14

das bezüglich der Achse z zum betrachteten Zeitpunkt eine Komponente, die im wesentlichen gleich der des theoretischen Steuermoments ist, und bezüglich der Achse x zu diesem selben betrachteten Zeitpunkt eine Komponente hat, die so nahe wie möglich bei der Komponente des theoretischen Steuermoments ist, und man leitet durch diese Korrelationsgesetzmäßigkeit das zugeordnete Dublett von möglichen Richtabweichungswinkelwerten ab, und

- man steuert (23, 23′, 23″, 23‴) die Antriebsmotoren (6) so, daß die Solargeneratorflügel in dieses Dublett von Richtabweichungswinkelwerten gebracht werden.

2. Verfahren nach Anspruch 1, dadurch gekennzeichnet, daß man Betätigungselemente (11, 12, 13, 14, 14′, 15, 16, 18, 20) steuert, mit denen der Satellit ausgerüstet ist, um Kompensationsmomente zu erzeugen, die durch die Momentabweichungen mindestens in der Achse x zwischen dem theoretischen Steuermoment und dem für die Korrelation gewählten realisierbaren Steuermoment definiert werden.

3. Verfahren nach Anspruch 1 oder Anspruch 2, dadurch gekennzeichnet, daß, wenn der Satellit ein System (10) zur Erzeugung eines kinetischen Moments mit in der Ebene der Rollachse und der Gierachse feststehenden Komponenten umfaßt, die Achsen x und z als mit der Rollachse bzw. mit der Gierachse zusammenfallend gewählt werden.

4. Verfahren nach Anspruch 3, dadurch gekennzeichnet, daß dieses System zur Erzeugung eines kinetischen Moments durch ein kinetisches Rad (10) mit zur Nord-Süd-Nickachse paralleler Achse gegeben ist.

5. Verfahren nach Anspruch 1 oder Anspruch 2, dadurch gekennzeichnet, daß, wenn der Satellit ein System zur Erzeugung eines richtbaren kinetischen Moments (10, 10′, 10″, 11, 12, 13, 14, 14′, 15, 16, 17, 18, 19) von gegebenenfalls Null mit einer veränderlichen Komponente in mindestens einer Achse der Ebene der Rollachse und der Gierachse aufweist, die Achse x als mit dieser Achse zusammenfallend gewählt wird und:
   - wenn das theoretische Steuermoment und das realisierbare Steuermoment verschieden sind, man an dieses System zur Erzeugung eines kinetischen Moments ein Steuersignal (25′, 25″$_x$, 25″$_z$) anlegt, das so ausgelegt ist, daß es eine Änderung dieser veränderlichen Komponente bewirkt, die geeignet ist, ein zusätzliches Moment zu erzeugen, das gleich der Differenz zwischen dem theoretischen und dem realisierbaren Steuermoment ist,
   - wenn das theoretische Steuermoment und das realisierbare Steuermoment gleich sind, man den Wert eines Entsättigungsmoments berechnet (24′, 24″$_x$, 24″$_z$), das geeignet ist, diese veränderliche Komponente des kinetischen Moments bis zu einem vorbestimmten Nennwert sich ändern zu lassen, man durch Berechnung ein theoretisches Gesamtsteuermoment bestimmt, das gleich der Summe des theoretischen Steuermoments und des Entsättigungsmoments ist, man in diesem Ort der möglichen Momente ein zweites realisierbares Steuermoment sucht, das bezüglich der Achse z eine Komponente, die im wesentlichen gleich der des theoretischen Steuermoments ist, und bezüglich der Achse x eine Komponente hat, die so nahe wie möglich bei der des theoretischen Gesamtsteuermoments ist, man davon durch die Korrelationsgesetzmäßigkeit ein zweites Dublett von möglichen Werten von Richtabweichungswinkeln ableitet, die man anschließend den Flügeln des Solargenerators auferlegt, und man dem System zur Erzeugung eines kinetischen Moments eine Änderung dieser veränderlichen Komponente auferlegt (25′, 25″$_x$, 25″$_z$), die so ausgelegt ist, daß sie ein Kompensationsmoment erzeugt, das gleich der Differenz zwischen dem zweiten realisierbaren Steuermoment und dem theoretischen Steuermoment, jedoch dieser entgegengesetzt ist, wobei diese beiden Schritte parallel durchgeführt werden können.

6. Verfahren nach Anspruch 5, dadurch gekennzeichnet, daß dieses System zur Erzeugung eines kinetischen Moments ein Reaktionsrad (11) aufweist, das gemäß der Achse einer veränderlichen Komponente gerichtet ist oder dessen Achse in der Ebene enthalten ist, die durch die Nickachse und die Achse einer veränderlichen Komponente definiert ist.

7. Verfahren nach Anspruch 6, dadurch gekennzeichnet, daß dieses System außerdem ein kinetisches Rad (10′) aufweist, das im wesentlichen gemäß der Nickachse gerichtet ist.

8. Verfahren nach Anspruch 6 oder Anspruch 7, dadurch gekennzeichnet, daß dieses Reaktionsrad (11) gemäß der Gierachse gerichtet ist, wobei die Achse x parallel zu dieser Gierachse und die Achse z parallel zur Rollachse gewählt ist.

9.  Verfahren nach Anspruch 5, dadurch gekennzeichnet, daß dieses System zur Erzeugung eines kinetischen Moments (10″, 15, 16, 17, 18, 19, 14′) so ausgelegt ist, daß es ein kinetisches Moment mit einer Vielzahl von Komponenten in verschiedenen Achsen in der Ebene der Rollachse und der Gierachse erzeugen kann, wobei die Achsen $x$ und $z$ zu jedem Zeitpunkt so definiert sind, daß die Abweichung dieser veränderlichen Komponenten von einem jeder Komponente zugeordneten vorbestimmten Wert minimiert wird.

10.  Verfahren nach Anspruch 9, dadurch gekennzeichnet, daß dieses System zur Erzeugung eines kinetischen Moments eine Vielzahl von Reaktionsrädern (15, 16) aufweist, deren Achsen jeweils in den Ebenen liegen, die einerseits durch die Nickachse und andererseits durch eine der Achsen einer veränderlichen Komponente des kinetischen Moments definiert sind.

11.  Verfahren nach Anspruch 9, dadurch gekennzeichnet, daß dieses System zur Erzeugung eines kinetischen Moments ein Rad (14′) aufweist, dessen Drehachse eine Vielzahl von Drehfreiheitsgraden mit zu den Achsen von veränderlichen Komponenten senkrechten Achsen hat.

12.  Verfahren nach Anspruch 11, dadurch gekennzeichnet, daß die Achse des Rades (14′) nominell gemäß der Nickachse des Satelliten gerichtet ist.

13.  Verfahren nach einem der Ansprüche 11 oder 12, dadurch gekennzeichnet, daß das Rad (14′) zwei Freiheitsgrade um die Rollachse und die Gierachse des Satelliten hat.

14.  Verfahren nach Anspruch 5 oder Anspruch 9, dadurch gekennzeichnet, daß dieses System zur Erzeugung eines kinetischen Moments (17, 18, 19) so ausgelegt ist, daß es ein kinetisches Moment mit zwei veränderlichen Komponenten in verschiedenen Achsen in der Ebene der Rollachse und der Gierachse erzeugen kann, wobei die Achsen $x$ und $z$ als mit diesen beiden Achsen einer veränderlichen Komponente zusammenfallend gewählt sind und durcheinander ersetzbar sind, wobei die Achse $z$ zu jedem Zeitpunkt als mit derjenigen der beiden Achsen zusammenfallend gewählt ist, die derjenigen der beiden veränderlichen Komponenten entspricht, die von einem dieser Achse zugeordneten vorbestimmten Nennwert am weitesten entfernt ist.

15.  Verfahren nach einem der Ansprüche 9, 10 oder 14, dadurch gekennzeichnet, daß dieses System zur Erzeugung eines kinetischen Moments von gegebenenfalls Null zwei Reaktionsräder (15, 16, 17, 18) aufweist, die gemäß der Rollachse bzw. der Gierachse gerichtet sind.

16.  Verfahren nach Anspruch 15, dadurch gekennzeichnet, daß dieses System ferner ein Reaktionsrad oder ein kinetisches Rad (10, 19) aufweist, das im wesentlichen gemäß der Nickachse gerichtet ist.

17.  Verfahren nach Anspruch 5, dadurch gekennzeichnet, daß das System zur Erzeugung eines kinetischen Moments zwei kinetische Räder (12, 13) aufweist, die V-förmig angeordnet sind, d.h. deren Achsen einerseits in der Ebene, die durch die Nickachse und die Achse einer veränderlichen Komponente definiert ist, und andererseits ungefähr symmetrisch zu beiden Seiten der Nickachse gelegen sind.

18.  Verfahren nach Anspruch 17, dadurch gekennzeichnet, daß die Achse einer veränderlichen Komponente gemäß der Gierachse gerichtet ist, wobei die Achse $x$ parallel zu dieser Gierachse und die Achse $z$ parallel zur Rollachse gewählt ist.

19.  Verfahren nach Anspruch 5, dadurch gekennzeichnet, daß das System zur Erzeugung eines kinetischen Moments ein kinetisches Rad (14) aufweist, dessen Achse einen Drehfreiheitsgrad mit zur Achse einer veränderlichen Komponente senkrechter Achse hat.

20.  Verfahren nach Anspruch 19, dadurch gekennzeichnet, daß die Achse des Rades (14) nominell gemäß der Nickachse des Satelliten gerichtet ist.

21.  Verfahren nach Anspruch 19 oder Anspruch 20, dadurch gekennzeichnet, daß die Achse einer veränderlichen Komponente gemäß der Gierachse gerichtet ist, wobei die Achse $x$ parallel zur Gierachse und die Achse z parallel zur Rollachse gewählt ist, wobei die Drehpunktsachse gemäß der Rollachse gerichtet ist.

22. Verfahren nach einem der Ansprüche 1 bis 21, dadurch gekennzeichnet, daß die Zyklusperiodendauer annähernd 0,5 Sekunden bis 1000 Sekunden beträgt.

**Claims**

1. Method of controlling the attitude in roll (X) and in yaw (Z) of an artificial satellite (1) stabilised in pitch (Y) on its orbit (2) in the solar system and comprising a satellite body (3) carrying on its North and South sides two solar generator panels (4, 5) normally approximately facing the Sun, adapted to be oriented independently of each other about a North-South pitch axis by drive motors (6) adapted to be commanded separately and comprising an attitude measurement system (7) adapted to provide at least a measurement of the attitude in roll or in yaw, this method comprising the following steps:
   . as a preliminary stage:
      - two geometrical axes $x$ and $z$ of the satellite are chosen in the plane of the roll and yaw axes, there being associated with the $z$ axis a maximum value of tolerable command torque error which is much lower than the maximal value of tolerable command torque error on the $x$ axis, and
      - a law of correlation is established between pairs of possible values of depointing angles $\gamma_N$ and $\gamma_S$ of the panels (4, 5) respectively carried by the North and South sides of the satellite body relative to a nominal configuration of said panels in which said panels face towards the Sun and possible solar command torques ($C_s$, $C_p$) resulting therefrom in the plane of the roll and yaw axes due to solar radiation pressure, and the locus of said possible torques is determined;
   . then, cyclically at a specific frequency that is constant or not as the satellite pursues its orbit:
      - instantaneous measurement signals from the attitude measurement system are used to calculate (21, 21', 21", 21''') a (possibly null) theoretical command torque in the plane of the roll and yaw axes needed to cancel any (possibly null) instantaneous attitude error of the satellite in the plane of the roll and yaw axes,
      - possible command torques are looked for on said locus having, relative to the $z$ axis at the time in question, a component substantially identical to that of the theoretical command torque and, relative to the $x$ axis at the same time in question, a component as close as possible to the component of the theoretical command torque, and said correlation law is used to deduce the associated pair of possible depointing angles, and
      - the drive motors (6) are commanded (23, 23', 23", 23''') to set the solar generator panels to said pair of depointing angle values.

2. Method according to claim 1 characterised in that the satellite includes actuators (11, 12, 13, 14, 14', 15, 16, 18, 20) which are commanded to generate compensation torques defined by the difference between the theoretical command torque about at least the $x$ axis and the possible command torque chosen for the correlation.

3. Method according to claim 1 or claim 2 characterised in that the satellite comprises a system (10) for generating kinetic moment with fixed components in the plane of the roll and yaw axes and the $x$ and $z$ axes are respectively coincident with the roll and yaw axes.

4. Method according to claim 3 characterised in that the kinetic moment generator system comprises a kinetic wheel (10) with its axis parallel to the North-South pitch axis.

5. Method according to claim 1 or claim 2 characterised in that the satellite comprises a system for generating an orientable kinetic moment (10, 10', 10", 11, 12, 13, 14, 14', 15, 16, 17, 18, 19), possibly with a null value, with a component variable with respect to at least one axis in the plane of the roll and yaw axes, the $x$ axis is coincident said axis, and:
   - if the theoretical and possible command torques are different, there is applied to said kinetic moment generator system a command signal (25', 25"x, 25"z) adapted to vary said variable component in such a way as to generate an additional torque equal to the difference between the theoretical and possible command torques,
   - if the theoretical and possible command torques are equal, there is calculated (24', 24"x, 24"z) the value of a desaturation torque adapted to vary said variable component of the kinetic moment until it equals a predetermined nominal value, a global theoretical command torque is calculated equal to the sum of the theoretical command torque and the desaturation torque, possible torques are looked for on said locus, a second possible command torque having a component about the $\underline{z}$ axis substantially equal to that of the theoretical command torque and a component about the $\underline{x}$ axis as close as possible to that of the global theoretical command torque, the correlation law is used to deduce therefrom a second pair of possible values of depointing angles subsequently imposed on the solar generator panels, and there is imposed (25′, 25″$\underline{x}$, 25″$\underline{z}$) on the kinetic moment generator system a variation of said variable components adapted to generate a compensation torque equal but opposite to the difference between the second possible command torque and the theoretical command torque, these two stages being realisable in parallel.

6. Method according to claim 5 characterised in that said kinetic moment generator system comprises a reaction wheel (11) on the variable component axis or whose axis is contained in the plane defined by the pitch axis and the variable component axis.

7. Method according to claim 6 characterised in that said system further comprises a kinetic wheel (10′) substantially on the pitch axis.

8. Method according to claim 6 or claim 7 characterised in that said reaction wheel (11) is on the yaw axis, the $\underline{x}$ axis is parallel to said yaw axis and the $\underline{z}$ axis is parallel to the roll axis.

9. Method according to claim 5 characterised in that said kinetic moment generator system (10″, 15, 16, 17, 18, 19, 14′) is adapted to generate a kinetic moment with a plurality of components on different axes in the plane of the pitch and yaw axes and the $\underline{x}$ and $\underline{z}$ axes are defined at all times so as to minimise the difference between said variable components and a respective associated predetermined value.

10. Method according to claim 9 characterised in that said kinetic moment generator system comprises a plurality of reaction wheels (15, 16) whose axes are respectively in the planes defined by the pitch axis and one of the kinetic moment variable component axes.

11. Method according to claim 9 characterised in that said kinetic moment generator system comprises a wheel (14′) whose rotation axis has a plurality of degrees of freedom in rotation with axes perpendicular to the variable component axes.

12. Method according to claim 11 characterised in that the axis of the wheel (14′) is nominally on the satellite pitch axis.

13. Method according to claim 11 or claim 12 characterised in that the wheel (14′) has two degrees of freedom about the satellite roll and yaw axes.

14. Method according to claim 5 or claim 9 characterised in that said kinetic moment generator system (17, 18, 19) is adapted to generate a kinetic moment with two variable components about different axes in the plane of the roll and yaw axes, the $\underline{x}$ and $\underline{z}$ axes are coincident with said two variable component axes and interchangeable and the $\underline{z}$ axis is at all times coincident with that of the two axes corresponding to that of the two variable components which is further from a predetermined nominal value associated with said axis.

15. Method according to claim 9 or claim 10 or claim 14 characterised in that said kinetic moment generator system comprises two reaction wheels (15, 16, 17, 18) respectively on the roll and yaw axes.

16. Method according to claim 15 characterised in that said system further comprises a reaction wheel or a kinetic wheel (10, 19) substantially on the pitch axis.

17. Method according to claim 5 characterised in that the kinetic moment generator system comprises two kinetic wheels (12, 13) disposed in a V arrangement with their axes in the plane defined by the pitch axis and the variable component axis and in a substantially symmetrical relationship thereto on the opposite side of the pitch axis, respectively.

**18.** Method according to claim 17 characterised in that the variable component axis is on the yaw axis, the $\underline{x}$ axis is parallel to said yaw axis and the $\underline{z}$ axis is parallel to the roll axis.

**19.** Method according to claim 5 characterised in that the kinetic moment generator system comprises a kinetic wheel (14) whose axis has one degree of freedom in rotation with an axis perpendicular to the variable component axis.

**20.** Method according to claim 19 characterised in that the axis of the wheel (14) is nominally on the satellite pitch axis.

**21.** Method according to claim 19 or claim 20 characterised in that the variable component axis is on the yaw axis, the $\underline{x}$ axis is parallel to the yaw axis, the $\underline{z}$ axis is parallel to the roll axis and the pivot axis is on the roll axis.

**22.** Method according to any one of claims 1 through 21 characterised in that the cycle period is between 0.5 second and 1 000 seconds approximately.

Fig.1

SOLEIL

TERRE

P

X

S

Z

Y

N

S

20

EP 0 435 708 B1

EP 0 435 708 B1

Fig.2

Fig.3

Fig.4

Fig.5

Fig.6

Fig.7

X

Z

Y

10´

11

Fig.8

X

12

13

Z

Y

Fig.9

X

14

Z

Y

Fig.10

X

15 10″

16

Z

Fig.11

Y

X

14′

Z

Fig.12

Y

X

17 19

18

Z

Fig.13

Y

X

20

Z

Fig.14

Y

Fig.15

DYNAMIQUE DU SATELLITE — ATTITUDE DU SATELLITE → MESURES DES SENSEURS **7** — ANGLE DE ROULIS ET/OU DE LACET $\alpha r, \alpha l$ → LOIS DE CONTROLE **21** — COUPLES COMMANDES $Cxc, Czc$ → CAPACITE DE COUPLES **22** — COUPLES COMMANDES POSSIBLES $Cxp, Czp$

COUPLES TOTAUX

COUPLES DE CONTROLES APPLIQUES ← PRESSION SOLAIRE ← DEPOINTAGE DES AILES ← MOTEURS D'ENTRAINEMENT **6** ← ANGLES DE ROTATION COMMANDES AUX AILES ← MODELE DES COUPLES SOLAIRES DE CONTROLE **23**

COUPLES PERTURBATEURS

20

EP 0 435 708 B1

Fig.16

Fig.17

Fig.18

EP 0 435 708 B1